# EUROPÄISCHE PATENTSCHRIFT

(11) **EP 4 153 368 B1**
(45) Veröffentlichungstag und Bekanntmachung des Hinweises auf die Patenterteilung: **04.10.2023**
(21) Anmeldenummer: 22750663.1
(22) Anmeldetag: 08.07.2022
(51) Int. Cl.: B09B 3/35, B02C 21/00, B02C 23/10

(54) **VERFAHREN ZUR HERSTELLUNG VON SCHROTTPRODUKTEN MIT HOHEM REINHEITSGRAD AUS INHOMOGENEM INPUTMATERIAL**
PROCESS FOR PRODUCING SCRAP MATERIALS WITH HIGH PURITY LEVEL FROM INHOMOGENEOUS INPUT MATERIAL
PROCÉDÉ POUR PRODUIRE DES REBUTS AVEC UN HAUT NIVEAU DE PURETÉ À PARTIR D'UN MATÉRIAU INITIAL HÉTÉROGÈNE

(30) Priorität: 13.07.2021 DE 102021118108
(43) Veröffentlichungstag der Anmeldung: 29.03.2023
(73) Patentinhaber: TSR Recycling GmbH & Co. KG, 44536 Lünen (DE)
(72) Erfinder: BLACKERT, Christian, 47877 Willich (DE); BRÜMMER, Aron, 47198 Duisburg (DE)
(74) Vertreter: Pelster Behrends Patentanwälte PartG mbB
(86) Internationale Anmeldenummer: PCT/EP2022/069050
(87) Internationale Veröffentlichungsnummer: WO 2023/285302

(56) Entgegenhaltungen:
- EP-A2- 0 103 778
- CN-A- 101 670 355

## Beschreibung

Die Erfindung betrifft ein Verfahren zur Herstellung von recyceltem Schrott, eine Anlage zum Recycling von Schrott, die für die Durchführung des Verfahrens optimiert ist, sowie ein verbessertes Zerkleinerungsaggregat zum Einsatz in entsprechenden Verfahren und Anlagen. Offenbart wird zudem ein mit diesem Verfahren herstellbarer recycelter Schrott mit besonders hohem Eisengehalt.

Der Gegenstand der Erfindung ist in den beigefügten Ansprüchen definiert.

Der Wertstoff Schrott wird durch das Verschrotten von alten metallischen Erzeugnissen gewonnen. Insbesondere Eisen- und Stahlschrott wird seit jeher nicht nur als Abfall, sondern auch als wichtiger Sekundärrohstoff angesehen, welcher in zahlreichen Anwendungen eingesetzt werden kann, um den Bedarf an neu hergestellten Metallen zu reduzieren. Durch den Einsatz von Schrott als Rohstoff wird dabei nicht nur die Abhängigkeit der Industrie von knappen Rohstoffen verringert und die Menge an andernfalls überflüssigem Müll reduziert. Durch den verringerten Bedarf an neu gewonnenen Metallen und Legierungen, deren großtechnische Herstellung regelmäßig mit einem erheblichen Bedarf an Energie und anderen Ressourcen einhergeht, wird auch ein nachhaltigeres Wirtschaften möglich.

Insbesondere im Bereich der Herstellung von Produkten für Hochleistungsanwendungen werden an eisenhaltige Schrotte besonders hohe Anforderung gestellt. Wenn statt neu gewonnenen Metallen Schrotte eingesetzt werden sollen, müssen diese zuverlässig über Materialeigenschaften verfügen, die denen von neu gewonnenen Metallen zumindest ähnlich sind.

Grundsätzlich besteht somit für viele industrielle Anwendungen ein großes Bedürfnis danach, besonders reine Schrottzusammensetzungen zu erhalten, die idealerweise auch noch eine vorteilhafte Schüttdichte aufweisen. Dies ist jedoch bekanntermaßen eine sehr herausfordernde Aufgabe, da die Ausgangsmaterialien für die Herstellung entsprechender Schrottzusammensetzungen inhärent heterogen sind, wobei beispielsweise zwei verschrottete Waschmaschinen unterschiedlicher Hersteller trotz der Ähnlichkeit der Produkte in Schrotten unterschiedlicher Beschaffenheit resultieren können.

Zum Erhalt entsprechender reiner Schrottzusammensetzungen sind im Stand der Technik verschiedene, zumeist sehr aufwendige Verfahren bekannt, die prinzipiell bis hin zu manuellen Sortierverfahren reichen können, in denen lediglich besonders geeignete Teile einer Schrottzusammensetzung durch Arbeiter isoliert werden. Die CN 101670355 A offenbart beispielsweise ein Verfahren und eine Vorrichtung zur schadlosen Behandlung und Ressourcenverwertung von Altkühlschränken. Die EP 0103778 A2 offenbart beispielsweise einen Hammerbrecher sowie ein Verfahren zu dessen Betrieb, insbesondere zum Zerkleinern von Altmaterial.

Betreiber von großtechnischen Schredderanlagen realisieren die Herstellung von vergleichsweise reinen Schrottzusammensetzungen in der Praxis häufig dadurch, dass die bearbeiteten Schrotte mehrmals durch die Aufbereitungsanlage und den Schredder geführt werden, d. h. die Schrotte zwei oder mehr Zerkleinerungsschritten, ggf. mit einer nachgeschalteten Sortierung, zugeführt werden, um verbesserte Reinheiten und/oder günstigere Schüttdichten im Material zu realisieren.

Die aus dem Stand der Technik bekannten Verfahren haben den Nachteil, dass sie vergleichsweise zeit- und/oder kostenintensiv sind, beispielsweise, weil sie eine doppelte Verarbeitung der Materialien erforderlich machen, wodurch der Ausschuss steigt und der Materialdurchsatz der Anlage zumindest halbiert wird. Zudem kann bei diesem Vorgehen im ersten Durchlauf Material in der Anlage verbleiben, welches erst beim zweiten Durchlaufen der Anlage bis zur Entnahmestelle geführt wird, so dass das erhaltene Material am Auslass regelmäßig Teile enthalten kann, die den notwendigen doppelten Schredder-Schritt gar nicht durchlaufen haben.

Zudem ist bei den aus dem Stand der Technik bekannten Verfahren häufig nachteilig, dass über das erhaltene Produkt vergleichsweise wenig Daten vorliegen. Dies ist problematisch, da es für viele Hochleistungsanwendungen regelmäßig nicht ausreichend ist, lediglich einen Schrott mit einer bestimmten Güte bereitzustellen, sondern es ist für viele Anwendungen essentiell, diese Güte auch belastbar belegen zu können, beispielsweise aus haftungstechnischen Gründen.

Zudem ist es bei den aus dem Stand der Technik bekannten Verfahren regelmäßig schwierig, die Produktqualität im Betrieb des Verfahrens aktiv zu steuern um diese beispielsweise möglichst schnell an Kundenwünsche anzupassen. Hierdurch ist es bei den aus dem Stand der Technik bekannten Verfahren regelmäßig nicht möglich, im kontinuierlichen Betrieb und/oder ohne Umrüstung der Anlage beispielsweise zwei unterschiedliche Schrottprodukte mit unterschiedlichen Spezifikationen unmittelbar nacheinander herzustellen.

Zudem ist es bei herkömmlichen Verfahren oft nicht möglich, in einer Produktionszeit, die eine effiziente großtechnische Produktherstellung ermöglicht, hohe Schüttdichten zu erzeugen, die für bestimmte Anwendungen vorteilhaft sind.

Die primäre Aufgabe der vorliegenden Erfindung war es, ein verbessertes Verfahren zur Herstellung von recyceltem Schrott anzugeben, mit welchem die aus dem Stand der Technik bekannten Nachteile ausgeräumt oder zumindest reduziert werden können.

Die Aufgabe der vorliegenden Erfindung war es somit, ein verbessertes Verfahren für die Herstellung von recyceltem Schrott in hoher Qualität und mit hoher Schüttdichte bereitzustellen, mit welchem aus den üblichen Schrottfraktionen, d.h. einem inhomogenen und besonders herausfordernden Ausgangsmaterial, ein besonders reines Schrottprodukt mit einer besonders günstigen Schüttdichte erhalten werden kann.

Hierbei war es die Aufgabe, ein Verfahren zur Herstellung von recyceltem Schrott anzugeben, mit welchem sich entsprechend hochwertige Produkte idealerweise bereits in einem Durchlauf herstellen lassen, so dass das zeit- und kosteneffiziente Verfahren besonders für die großtechnische Herstellung dieser hochqualitativen Schrottprodukte in großen Mengen und zu einem niedrigen Preis einsetzbar sein sollte.

Gegenüber dem Stand der Technik sollte es durch das anzugebende Verfahren zur Herstellung von recyceltem Schrott dabei insbesondere auch möglich werden, bei industriell relevanten Umsätzen eine wesentlich höhere Reinheit zu erzielen, als es mit den bisherigen Verfahren möglich war.

Dabei war es eine ergänzende Vorgabe, dass das anzugebende Verfahren zur Herstellung von recyceltem Schrott mit herkömmlichen Schrottfraktionen als Ausgangsmaterial betrieben werden können sollte und dass dieses möglichst weitgehend mit solchen Gerätschaften betreibbar sein sollte, welche in üblichen Schrottaufbereitungsanlagen bereits zur Verfügung stehen.

Dabei war es eine ergänzende Aufgabe der vorliegenden Erfindung, dass das anzugebende Verfahren zur Herstellung von recyceltem Schrott so ausgestaltet werden sollte, dass dabei automatisch umfassendere Informationen über die Eigenschaften der jeweils produzierten Schrottchargen erhalten werden sollten.

Zudem sollte das anzugebende Verfahren zur Herstellung von recyceltem Schrott eine hohe Flexibilität und leichte Anpassbarkeit aufweisen, und dadurch besonders effizient an sich ändernde Qualitätsanforderungen seitens des Abnehmers anpassbar sein, idealerweise sogar im laufenden Betrieb. Insoweit war es eine ergänzende Aufgabe der vorliegenden Erfindung, dass das anzugebende Verfahren zur Herstellung von recyceltem Schrott eine flexible Anpassung der chemischen Zusammensetzung und/oder der Teilchenform und/oder der Schüttdichte des recycelten Stoffes ermöglicht.

Darüber hinaus war es wünschenswert, dass im anzugebenden Verfahren zur Herstellung von recyceltem Schrott insbesondere auch das Risiko von fehlerhaften und für den Abnehmer unbrauchbaren Schrottchargen reduziert werden sollte.

Es war eine zusätzliche Aufgabe der vorliegenden Erfindung, dass das anzugebende Verfahren zur Herstellung von recyceltem Schrott besonders sicher und emissionsarm zu betreiben sein sollte, um die Gefahren und die Belastung für Mensch und Umwelt zu reduzieren.

Darüber hinaus war es eine sekundäre Aufgabe der vorliegenden Erfindung einen recycelten Schrott anzugeben, bei welchem es sich um ein hochwertiges Schrottprodukt handelt, welches auch für Hochleistungsanwendungen geeignet ist.

Zudem war es eine sekundäre Aufgabe der vorliegenden Erfindung, eine verbesserte Anlage zum Recycling von Schrott sowie ein neuartiges Zerkleinerungsaggregat anzugeben, die jeweils für den Einsatz im anzugebenden Verfahren besonders optimiert sein sollten.

Die Erfinder der vorliegenden Erfindung haben ein neuartiges und leistungsfähiges Verfahren und die zugehörigen Anlagen entwickelt, mit dem die vorstehenden Aufgaben gelöst werden können. Dieses Verfahren basiert dabei vereinfacht zusammengefasst auf einer umfassenden Modifikation der bestehenden Verfahrenstechnik, wobei der Fokus insbesondere auf einer spezifischen Kopplung der Separationstechnik mit der Verfahrensanalytik liegt, wie sie in den Ansprüchen definiert ist.

Mit dem erfindungsgemäßen Verfahren kann, nach Einschätzung der Erfinder erstmalig, ein hochwertiges Schrottprodukt in industriell relevanten Mengen, zeit- und kosteneffizient in einem einzigen Durchgang hergestellt werden. Hierbei können trotz des Einsatzes von inhomogenen Ausgangsmaterialien, d.h. den üblichen Schrottfraktionen, Eisengehalte von 97 % und mehr, eine annähernde Freiheit von organischen Verunreinigungen und vorteilhafte Schüttdichten erzielt werden, die sich mit vergleichbaren großtechnischen Verfahren aus dem Stand der Technik nach Einschätzung der Erfinder nicht realisieren ließen, zumindest nicht bei vergleichbarem Materialdurchsatz und/oder mit einer vergleichbaren Reproduzierbarkeit. Als synergistischer Vorteil können die im Zuge der Aufbereitung gewonnenen Materialinformationen auch zur Dokumentation der Materialbeschaffenheit verwendet werden, wodurch eine Zertifizierung der hergestellten Schrottprodukte ohne großen Mehraufwand möglich wird.

In eigenen Versuchen der Erfinder konnten im großtechnischen Maßstab recycelte Schrotte mit einem Eisengehalt von mehr als 97 % und, durch den Einsatz einer bevorzugten erfindungsgemäßen Anlage, Schüttdichten von etwa als 1,5 t/m³ mit annähernd sphärischen Partikeln erhalten werden.

Die vorstehend genannten Aufgaben werden somit durch ein Verfahren zur Herstellung von recyceltem Schrott, den damit herstellbaren Schrott, Anlagen zum Recycling von Schrott und Zerkleinerungsaggregate gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Ausführungsformen, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter recycelter Schrotte, bevorzugter Anlagen zum Recycling von Schrott und bevorzugter Zerkleinerungsaggregate ergeben sich aus den Merkmalen bevorzugter Verfahren.

Die Erfindung betrifft ein Verfahren zur Herstellung von recyceltem Schrott, umfassend die folgenden Schritte:
a) Herstellen oder Bereitstellen einer inhomogenen eisenhaltigen Schrottzusammensetzung,
b) Zerkleinern der inhomogenen, eisenhaltigen Schrottzusammensetzung in einem Zerkleinerungsaggregat zum Erhalt eines zerkleinerten Materials,
c) Abtrennen von organischen und/oder anorganischen Verunreinigungen aus dem zerkleinerten Material zum Erhalt eines vorgereinigten Materials,
d) Analysieren des vorgereinigten Materials mit einer oder mehreren ersten Detektionsvorrichtungen zur Detektion zumindest einer ersten Materialinformation und Aussondern von Bestandteilen des vorgereinigten Materials zum Erhalt eines aufgereinigten Materials, wobei das Aussondern in Abhängigkeit der ersten Materialinformation erfolgt, und
e) Analysieren des aufgereinigten Materials mit einer oder mehreren zweiten Detektionsvorrichtungen zur Detektion zumindest einer zweiten Materialinformation,
f) Abgleichen der detektierten zweiten Materialinformation mit einem der zweiten Materialinformation zugeordneten vorgegebenen Materialkriterium,
wobei das aufgereinigte Material als recycelter Schrott ausgegeben wird, wenn die zweite Materialinformation das zugeordnete vorgegebene Materialkriterium erfüllt.

Das erfindungsgemäße Verfahren ist prinzipiell auch für kleine Maßstäbe geeignet. So konnte beispielsweise im Technikumsmaßstab gezeigt werden, dass sich mit dem erfindungsgemäßen Verfahren ausgezeichnete Schrottprodukte herstellen lassen. Bei kleinen Durchsatzmengen konkurriert das erfindungsgemäße Verfahren wirtschaftlich jedoch stärker mit aufwendigeren manuellen Verfahren, wobei beispielsweise eine physikalisch-chemische Auftrennung einer Schrottzusammensetzung im Labormaßstab potentiell auch reine Schrottprodukte liefern könnte. Die großen Vorteile des erfindungsgemäßen Verfahrens zeigen sich bei großtechnischen Verfahren, die entsprechend besonders bevorzugt sind. Ganz besonders bevorzugt sind erfindungsgemäße Verfahren, wobei pro Stunde 30000 kg oder mehr, bevorzugt 60000 kg oder mehr, besonders bevorzugt 75000 kg oder mehr an recyceltem Schrott ausgegeben wird. Der Fachmann versteht, dass die großtechnische Ausführung und insbesondere die angegebenen Durchsatzmengen in der Praxis ganz besondere Anforderungen an das Verfahren, die verwendeten Maschinen und die einzusetzenden Rohstoffe implizieren. So steigt beispielsweise der Bedarf an Ausgangsschrotten zu Herstellung der inhomogenen eisenhaltigen Schrottzusammensetzung, so dass die Auswahl weniger selektiv sein kann und dadurch die Inhomogenität des Ausgangsmaterials regelmäßig steigt.

In Schritt a) des erfindungsgemäßen Verfahrens wird eine inhomogene eisenhaltige Schrottzusammensetzung bereitgestellt oder unmittelbar im Verfahren hergestellt.

Die Herstellung kann in der Praxis beispielsweise dadurch erfolgen, dass Schrott aus mehreren eisenhaltigen Schrottfraktionen gemischt wird. Dieses Mischen kann beispielsweise dadurch erfolgen, dass die entsprechenden Mengen unterschiedlicher Schrottfraktionen nacheinander in das Zerkleinerungsaggregat gegeben werden oder gemeinsam auf einen Zulauf zum Zerkleinerungsaggregat gegeben werden, so dass Sie gleichzeitig in das Zerkleinerungsaggregat gelangen. Diese Form der Herstellung hat sich in der Praxis als besonders effizientes Vorgehen erwiesen. Darüber hinaus ermöglicht es die ins Verfahren integrierte Herstellung durch Mischung aus mehreren Schrottfraktionen vorteilhafterweise, die Zusammensetzung der Mischung durch eine Anpassung des Mischungsverhältnisses zu steuern. Bevorzugt ist deshalb ein erfindungsgemäßes Verfahren, wobei das Herstellen der inhomogenen, eisenhaltigen Schrottzusammensetzung in Schritt a) durch Mischen von Schrott aus mehreren eisenhaltigen Schrottfraktionen erfolgt, wobei das Mischen vorzugsweise im Wesentlichen im Zerkleinerungsaggregat erfolgt.

Der Begriff Schrottfraktion ist für den Fachmann im Bereich der Metallaufbereitung klar. Der Fachmann kann unterschiedliche eisenhaltige Schrottfraktionen zwanglos voneinander unterscheiden. Zumeist handelt es sich bei Schrottfraktionen um Sammlungen von gleichartigen Stoffen, die gemäß bestimmter Auswahlkriterien zusammengestellt sind und gemeinsam gesammelt und/oder prozessiert werden.

Dabei kann die Zusammensetzung der verschiedenen eisenhaltigen Schrottfraktionen infolge sich ändernder gesetzlicher Regularien oder brancheninterner Vorgaben variieren. Eine Schrottfraktion, die beispielsweise aus sogenannter weißer Ware, d. h. beispielsweise Waschmaschinen und Backöfen, besteht, ist für den Fachmann stets von einer Schrottfraktion zu unterscheiden, die beispielsweise aus gepressten Fahrzeugkarossen oder aus Rücklaufschrotten von metallverarbeitenden Betrieben bestehen.

In Übereinstimmung mit dem fachmännischen Verständnis ist eine eisenhaltige Schrottfraktion somit ein Ordnungskriterium zur Zusammenstellung von möglichst gleichartigen Schrotten, die, obwohl hinsichtlich der Schrottzusammensetzung in den meisten Fällen in sich ebenfalls inhomogen, eine geringere Abweichung in den Materialeigenschaften der in der Schrottfraktion enthaltenen Schrotte aufweist, als die Schrotte einer zweiten eisenhaltigen Schrottfraktion, in der andere untereinander ähnliche Schrotte zusammengefasst sind. In der Praxis werden entsprechende Schrottfraktionen zumeist gemäß den jeweils geltenden Vorschriften separat gesammelt und beim Verwerter separat gelagert.

In den Versuchen der Erfinder wurde eine breite Palette an üblichen Schrottfraktionen zur Herstellung der inhomogenen eisenhaltigen Schrottzusammensetzung verwendet. Von diesen sind bestimmte Schrottfraktionen wegen ihrer guten Verfügbarkeit und der vergleichsweise hohen Eisengehalte besonders vorteilhaft. Bevorzugt ist ein bevorzugtes erfindungsgemäßes Verfahren, wobei die eine oder die mehreren eisenhaltigen Schrottfraktionen ausgewählt sind aus der Gruppe bestehend aus Rücklaufschrotten, weißer Ware, Verbundwerkstoffen, Müllverbrennungsschrotten, Schreddervormaterialien und Altfahrzeugen. In Übereinstimmung mit dem fachmännischen Verständnis ist der Ausdruck weiße Ware der Fachterminus für Haushaltsgeräte wie Kühlschränke, Waschmaschinen, Geschirrspüler oder Herde und steht in Abgrenzung zur sogenannten braunen Ware, die Geräte der Unterhaltungselektronik wie bspw. Fernseher oder Mobiltelefone bezeichnet. Schreddervormaterial stammt beispielsweise von Entsorgungsbetrieben oder Sortieranlagen und umfasst regelmäßig beispielsweise Fahrräder, Markisen und ähnliche Gegenstände.

Für das erfindungsgemäße Verfahren ist die tatsächliche Zusammensetzung der zur Herstellung verwendeten Schrottfraktionen bzw. der inhomogenen eisenhaltigen Schrottzusammensetzung, d.h. der insbesondere in Bezug auf die Zusammensetzung aus verschiedenen Einzelteilen inhomogenen eisenhaltigen Schrottzusammensetzung, letztlich nicht entscheidend. Im Sinne der vorliegenden Erfindung sollte die eisenhaltige Schrottzusammensetzung aber inhomogen sein, da die Verarbeitung homogener Ausgangsmaterialien signifikant weniger anspruchsvoll wäre. Dieses Kriterium ist vom Fachmann in der Praxis zwanglos zu bestimmen. In Übereinstimmung mit dem fachmännischen Verständnis wird eine eisenhaltige Schrottzusammensetzung in jedem Fall dann als inhomogen angesehen, wenn die eisenhaltige Schrottzusammensetzung durch Mischen von zwei oder mehr eisenhaltigen Schrottfraktionen hergestellt wurde, und/oder wenn sie Teile umfasst, die durch Verschrotten von zwei oder mehr Gegenständen unterschiedlicher Kategorien erhalten wurden, die ausgewählt sind aus der Gruppe bestehend aus Haushaltsgeräten aus dem Bereich der weißen Ware, Fahrzeugen und Ausschuss aus metallverarbeitenden Betrieben.

In Schritt b) des erfindungsgemäßen Verfahrens erfolgt das Zerkleinern der eisenhaltigen Schrottzusammensetzung. Dies erfolgt erfindungsgemäß mit einem Zerkleinerungsaggregat. Schritt b) entspricht somit beispielsweise dem dem Fachmann aus dem Stand der Technik bekannten Schritt des Schredderns.

Auch wenn eine Vielzahl von Zerkleinerungsaggregaten in Frage kommt, beispielsweise Schrottscheren, Kondiratoren und Zerdiratoren hat sich insbesondere zur Umsetzung großer Materialmengen der Einsatz eines Schredders oder eines Zerdirators als besonders vorteilhaft erwiesen. Im Sinne der vorliegenden Erfindung werden unter Zerdiratoren Zerkleinerungsaggregate verstanden, die im Boden des Zerkleinerungsraums einen zumeist mit einem Rost abgedeckten Austrittsbereich für das zerkleinerte Material aufweisen, wobei Zerdiratoren jedoch optional auch im oberen Teil des Zerkleinerungsraums einen weiteren Austrittsbereich aufweisen können. Im Gegensatz hierzu werden unter dem Begriff Schredder solche Zerkleinerungsaggregate verstanden, die im Boden des Zerkleinerungsraums keinen Austrittsbereich für das zerkleinerte Material aufweisen, sondern bei denen der zumeist mit einem Rost abgedeckte Austrittsbereich für das zerkleinerte Material im oberen Teil des Zerkleinerungsraum angeordnet ist.

Ganz besonders bevorzugt ist der Einsatz eines erfindungsgemäßen Zerkleinerungsaggregats, welches es durch die Konstruktion mit einer verstellbaren Bodenplatte und/oder Deckplatte ermöglicht, die zur Verfügung stehende Austrittsfläche der Partikel aus dem Zerkleinerungsraum zu verändern.

Hierdurch kann der Austritt der zerkleinerten Partikel reduziert werden, wodurch die mittlere Verweilzeit der Partikel im Zerkleinerungsaggregat erhöht werden kann. Dadurch lässt sich vorteilhafterweise die Intensität der Zerkleinerung von außen steuern, sogar im laufenden Betrieb. Durch die Erhöhung der mittleren Verweilzeit, die sogar bis zu einer temporär vollständigen Blockade des Austrittsbereichs reichen kann, ist je nach Bedarf und Anforderung eine Steigerung der Reinigungsleistung und/oder eine Verringerung des Partikeldurchmessers sowie eine Steigerung der Schüttdichte möglich. Explizit bevorzugt ist somit ein erfindungsgemäßes Verfahren, wobei das Zerkleinerungsaggregat über einen Zerkleinerungsraum mit zumindest einem Austrittsbereich für zerkleinertes Material verfügt, wobei im Austrittsbereich verstellbare Elemente, bevorzugt eine verstellbare Bodenplatte und/oder Deckplatte, besonders bevorzugt eine hydraulisch verstellbare Bodenplatte und/oder Deckplatte, angeordnet sind, mit denen die zur Verfügung stehende Austrittsfläche der Partikel aus dem Zerkleinerungsraum verändert werden kann.

Die Erfinder der vorliegenden Erfindung sind zu der Einschätzung gelangt, dass die Realisierung der vorstehenden Verfahrensführung am vorteilhaftesten durch die verstellbare Bodenplatte und/oder Deckplatte erfolgen kann, die beispielsweise im Inneren oder an der Außenseite des Zerkleinerungsraums, bevorzugt an der Außenseite des Zerkleinerungsraums, angebracht sind. Die verstellbaren Elemente sind bevorzugt ferngesteuert verstellbar. Grundsätzlich bevorzugt ist im Lichte der vorstehenden Ausführungen somit ein erfindungsgemäßes Verfahren, wobei in Schritt b) die Verweilzeit der Schrottzusammensetzung im Zerkleinerungsaggregat, insbesondere die mittlere Verweilzeit, gesteuert wird, um die mittlere Partikelgröße des zerkleinerten Materials zu steuern, bevorzugt durch im Austrittsbereich angeordnete verstellbare Elemente.

Wenn es sich bei dem Zerkleinerungsaggregat um einen Schredder handelt, ist bevorzugt zumindest ein verstellbares Element, beispielsweise eine verstellbare Klappe, an dem im oberen Teil des Zerkleinerungsraums angeordneten Austrittsbereich vorgesehen. Wenn es sich bei dem Zerkleinerungsaggregat um einen Zerdirator handelt, ist bevorzugt zumindest ein verstellbares Element an dem im Boden des Zerkleinerungsraums angeordneten Austrittsbereich vorgesehen. Ganz besonders bevorzugt ist es jedoch, wenn ein bevorzugtes erfindungsgemäßes Zerkleinerungsaggregat eingesetzt wird, welches zumindest ein erstes verstellbares Element an einem im oberen Teil des Zerkleinerungsraums angeordneten Austrittsbereich und ein zweites verstellbares Element an einem im Boden des Zerkleinerungsraums angeordneten Austrittsbereich aufweist. Neben der vorteilhaften Möglichkeit, die Verweilzeit der Schrottzusammensetzung im Zerkleinerungsaggregat sogar durch zwei verschiedene verstellbare Elemente zu steuern, ist es vorteilhafterweise möglich, durch Verstellung der im unteren Austrittsbereich positionierten verstellbaren Elemente den im Boden des Zerkleinerungsraums angeordneten Austrittsbereich vollständig zu schließen. Hierdurch ist es vorteilhafterweise möglich, das Zerkleinerungsaggregat flexibel sowohl als Zerdirator als auch als Schredder zu betreiben. Beispielsweise können anspruchsvolle Schrottzusammensetzungen mit geschlossener Bodenplatte im Schredderbetrieb zerkleinert werden. Wenn hingegen eine weniger anspruchsvolle Schrottzusammensetzung eingesetzt wird, die beispielsweise vor allem metallische Bleche umfasst, kann die Bodenplatte geöffnet werden um den Durchsatz im Zerdiratorbetrieb zu steigern.

Die Erfinder der vorliegenden Erfindung konnten für das Zerkleinerungsaggregat besonders geeignete Betriebsparameter identifizieren. Bevorzugt ist nämlich ein erfindungsgemäßes Verfahren, wobei der mit Hämmern bestückte Rotor des Zerkleinerungsaggregats durch einen Elektromotor angetrieben wird, wobei die Leistung des Elektromotors bevorzugt mehr als 2000 kW, besonders bevorzugt mehr als 2400 kW, ganz besonders bevorzugt mehr als 2800 kW, beträgt.

Insbesondere bei großen Materialdurchsätzen kann es in Schritt b) zu einer erheblichen Staubentwicklung kommen. Insbesondere bei der Verfahrensführung mit der Steuerung der zur Verfügung stehenden Austrittsfläche der Partikel aus dem Zerkleinerungsraum lassen sich auch im kontinuierlichen Betrieb Partikelgrößen erreichen, die regelmäßig unter denen liegen, die in herkömmlichen Verfahren erreicht werden. Insoweit ist die Staubproblematik in erfindungsgemäßen Verfahren in vielen Fällen besonders ausgeprägt. Die Erfinder der vorliegenden Erfindung schlagen in Folge von eigenen Experimenten vor, unmittelbar am Zerkleinerungsaggregat eine Entstaubungsanlage vorzusehen, um eine Belastung der Umwelt bestmöglich zu vermeiden. Bevorzugt ist somit ein erfindungsgemäßes Verfahren, wobei das Zerkleinerungsaggregat eine Entstaubungsanlage, bevorzugt eine Trockenentstaubungsanlage, umfasst, vorzugsweise mit ein oder mehreren Aktivkohlefiltern.

In Schritt c) erfolgt eine erste Aufbereitungsstufe, bei der organische und/oder anorganische Verunreinigungen aus dem aus dem Zerkleinerungsaggregat erhaltenen zerkleinerten Material entfernt werden. Dieser prinzipielle Schritt des Abtrennens findet sich teilweise in Verfahren aus dem Stand der Technik, wo in vielen Fällen eine einzige, vergleichsweise einfache Abtrennvorrichtung die Aufbereitung darstellt.

Diese Abtrennung erfasst vorteilhafterweise so viele, meist makroskopische Verunreinigungen wie möglich. In Übereinstimmung mit dem fachmännischen Verständnis definiert Schritt c) nicht, dass sämtliche Verunreinigungen abgetrennt werden, so dass es sich um ein zumindest teilweises Abtrennen handelt. Bevorzugt ist dabei ein erfindungsgemäßes Verfahren, wobei die anorganischen Verunreinigungen metallische oder mineralische Verunreinigungen sind, bevorzugt metallische Verunreinigungen.

Auch wenn es zumindest in der Theorie denkbar wäre, die Abtrennung in Schritt c) manuell zu erledigen, beispielsweise durch ein Sortieren am Fließband, erfordert dies für die vorliegend besonders relevante großtechnische Schrottaufbereitung große Mengen an Arbeitskraft, so dass dies zumindest in den meisten Industrienationen unwirtschaftlich wäre. Bevorzugt ist entsprechend ein erfindungsgemäßes Verfahren, wobei das Abtrennen in Schritt c) mit einer oder mehreren Abtrennvorrichtungen, bevorzugt automatisierten Abtrennvorrichtungen, erfolgt.

Die Erfinder der vorliegenden Erfindung haben unter den verschiedenen Abtrennverfahren die identifiziert, die für das erfindungsgemäße Verfahren besonders geeignet sind. Hierbei handelt es sich um die Langteilseparation, die Windsichtung, die Magnetabscheidung und die Absiebung, die dem Fachmann für sich grundsätzlich ebenso bekannt sind, wie die hierfür verwendeten Vorrichtungen.

Die Erfinder der vorliegenden Erfindung schlagen für eine Optimierung der Qualität des erhaltenen Schrottprodukts vor, dass zwei oder mehr dieser Arbeitsschritte kombiniert werden sollten. Bevorzugt ist demnach ein erfindungsgemäßes Verfahren, wobei das Abtrennen von organischen und/oder metallischen Verunreinigungen in Schritt c) zwei oder mehr, bevorzugt drei oder mehr, besonders bevorzugt vier oder mehr, unterschiedliche Arbeitsschritte umfasst, die ausgewählt sind aus der Gruppe bestehend aus Langteilseparation, Windsichtung, Magnetabscheidung und Absiebung.

Die Erfinder der vorliegenden Erfindung haben in den bisherigen Versuchen Fragen der Kosteneffizienz weitgehend ausgeblendet und sich darauf konzentriert, eine möglichst hohe Produktqualität des recycelten Schrotts zu erreichen und dadurch einen besonders geeigneten Aufbau für das erfindungsgemäße Verfahren und die erfindungsgemäße Anlage identifiziert. Bevorzugt ist nach Einschätzung der Erfinder ein erfindungsgemäßes Verfahren, wobei das Abtrennen von organischen und/oder metallischen Verunreinigungen eine Langteilseparation, eine Windsichtung, bevorzugt mit einem Windsichter mit zwei oder mehr Kaskaden, eine Magnetabscheidung und eine Absiebung umfasst, bevorzugt in dieser Reihenfolge, wobei die Magnetabscheidung vorzugsweise unter Einsatz von zwei Magnetabscheidern erfolgt, die bevorzugt als Elektromagneten ausgeführt sind, wobei die Feldstärke des Elektromagneten besonders bevorzugt einstellbar ist.

Im erfindungsgemäßen Verfahren ist besonders, dass das in Schritt c) erhaltene vorgereinigte Material, d. h. das zerkleinerte Material, aus welchem bereits organische und/oder anorganische Verunreinigungen zumindest teilweise abgetrennt wurden, in Schritt d) mit einer ersten Detektionsvorrichtung analysiert wird.

Hierbei wird zumindest eine Materialinformation, bevorzugt mehrere Materialinformationen, detektiert. Dies bedeutet, dass das vorgereinigte Material nach der Vorreinigung automatisiert untersucht wird. Die hierbei bestimmte erste Materialinformation wird dabei in den meisten Fällen zielführenderweise so gewählt werden, dass sie mit der chemischen Zusammensetzung und/oder der Form der Partikel und/oder der Größe der Partikel im vorgereinigten Material korreliert. Bei den Materialinformationen kann es sich beispielsweise um spektroskopische Messwerte oder um optische Bildaufnahmen vom vorgereinigten Material handeln.

Anschließend erfolgt in Schritt d) das Aussondern von Bestandteilen aus diesem vorgereinigten Material in Abhängigkeit der detektierten Materialinformation. Dies bedeutet, dass beispielsweise ein im vorgereinigten Material enthaltenes Teil, für welches eine erste Materialinformation erhalten wurde, welche nicht den vorgegebenen Kriterien oder Spezifikationen entspricht, beispielsweise hinsichtlich der chemischen Zusammensetzung oder der Form, aufgrund dieser Materialinformation ausgesondert wird. Der Schritt d) des erfindungsgemäßen Verfahrens stellt somit insgesamt eine durch eine Detektionsvorrichtung gestützte Aussonderung dar. Die hierfür eingesetzten Detektionsvorrichtungen können sämtliche dem Fachmann bekannten Detektionsvorrichtungen sein, insbesondere spektroskopische und optische Detektionsvorrichtungen.

Da die Zahl der auszusondernden Störpartikel bedingt durch vorangegangene Abtrennung zumeist vergleichsweise niedrig ist, scheint es zumindest in der Theorie leichter möglich, das Aussondern in Schritt d) manuell zu erledigen. In diesem Fall werden die ersten Materialinformationen den Arbeitern zielführenderweise beispielsweise über einen Bildschirm oder eine andere Schnittstelle angezeigt, durch die der Arbeiter die Information erhält, welches Teil aus dem vorgereinigten Material zu entfernen ist. Mit Blick auf den realisierbaren Materialdurchsatz und insbesondere auch auf die Genauigkeit der Aussonderung ist es jedoch explizit bevorzugt, wenn das Aussondern automatisiert erfolgt. Den Erfindern ist es dabei in der eigenen Anlage gelungen, besonders leistungsfähige Vorrichtungen zu identifizieren, die hierfür mit der ersten Detektionsvorrichtung verbunden werden, beispielsweise über eine Datenverarbeitungsvorrichtung oder ein Netzwerk. Bevorzugt ist daher ein erfindungsgemäßes Verfahren, wobei das Aussondern in Schritt d) durch eine automatisierte Vorrichtung, bevorzugt durch eine Druckluftpistole, beispielsweise in der Form einer Leiste mit mehreren Druckluftdüsen, oder einen Roboterarm, bevorzugt durch einen Roboterarm erfolgt.

Das derart aufgereinigte Material durchläuft in dem erfindungsgemäßen Verfahren eine weitere Detektionsvorrichtung, die zumindest eine zweite Materialinformation, bevorzugt mehrere Materialinformationen detektiert. Diese zweite Materialinformation wird erfindungsgemäß mit einem der Materialinformation zugeordneten, bzw. dem jeder Materialinformation jeweils zugeordneten, Materialkriterium abgeglichen. Dies bedeutet, dass beispielsweise spektroskopisch ermittelte Messwerte mit Grenzwerten abgeglichen werden oder die optisch ermittelte Form von Teilchen mit einer Schablone einer akzeptierten Teilchenform abgeglichen wird.

Nur wenn die zweite Materialinformation das zugeordnete vorgegebene Materialkriterium erfüllt, wird das aufgereinigte Material im erfindungsgemäßen Verfahren als recycelter Schrott ausgegeben, d.h. als Produkt des Verfahrens, welches beispielsweise über Förderbänder zu einer geeigneten Lagerstätte geführt werden kann. In den anderen Fällen wird das aufgereinigte Material beispielsweise entsorgt, in nachgelagerte Anlagen zur Nachbereitung geführt oder in das erfindungsgemäße Verfahren rezykliert, wobei letzteres grundsätzlich bevorzugt ist. Aus Gründen der Effizienz ist es dabei aber vorteilhaft das Rezyklat nicht wieder in das Zerkleinerungsaggregat einzusetzen, sondern es in den Schritten c) oder d) einzusetzen. Bevorzugt ist somit ein erfindungsgemäßes Verfahren, wobei das aufgereinigte Material erneut in Schritt b) oder Schritt c) oder Schritt d) eingesetzt wird, wenn die zumindest eine zweite Materialinformation das vorgegebene Materialkriterium nicht erfüllt.

Bevorzugt ist es dabei, wenn der Abgleich durch eine Datenverarbeitungsvorrichtung, beispielsweise einen Computer, erfolgt. Bevorzugt ist insoweit auch ein erfindungsgemäßes Verfahren, wobei das vorgegebene Materialkriterium im Verfahren durch eine Datenverarbeitungsvorrichtung übermittelt und/oder von einer Speichereinheit abgerufen wird.

Bevorzugt ist ein erfindungsgemäßes Verfahren, wobei das aufgereinigte Material als recycelter Schrott ausgegeben wird, wenn sämtliche der zweiten Materialinformationen das jeweils zugeordnete vorgegebene Materialkriterium erfüllen.

Das Analysieren in den Schritten d) und e) weist viele Gemeinsamkeiten auf.

Für eine effiziente Verfahrensführung in dem bevorzugten kontinuierlichen oder halbkontinuierlichen Verfahren ist es wünschenswert, dass auch die Detektionsvorrichtungen kontinuierlich betrieben werden. Bevorzugt ist ein erfindungsgemäßes Verfahren, wobei das Analysieren in Schritt d) und/oder Schritt e), bevorzugt in Schritt d) und Schritt e), kontinuierlich, insbesondere in einer Inline-Analyse erfolgt.

Zum Erreichen einer möglichst optimalen Materialbeschaffenheit, insbesondere zur gleichzeitigen Optimierung des Eisengehalts, des Gehalts an organischen Verunreinigungen und/oder der Partikelform hat es sich als besonders vorteilhaft erwiesen, mit der ersten Detektionsvorrichtung und/oder der zweiten Detektionsvorrichtung unabhängig voneinander jeweils mehrere Materialinformationen zu detektieren. Bevorzugt ist also ein erfindungsgemäßes Verfahren, wobei in Schritt d) zumindest zwei, bevorzugt zumindest drei, erste Materialinformationen detektiert werden und/oder wobei in Schritt e) zumindest zwei, bevorzugt zumindest drei, zweite Materialinformationen detektiert werden. Bevorzugt ist vor diesem Hintergrund auch ein erfindungsgemäßes Verfahren, wobei die zumindest eine erste Materialinformation und/oder die zumindest eine zweite Materialinformation, bevorzugt sämtliche Materialinformationen, mit der chemischen Zusammensetzung und/oder der Partikelform und/oder den mechanischen Eigenschaften des analysierten Materials, bevorzugt mit der chemischen Zusammensetzung des analysierten Materials, korrelieren.

Hierfür ist es für die große Mehrzahl der erfindungsgemäßen Verfahren bevorzugt, wenn zumindest eine der ersten Materialinformationen und zumindest eine der zweiten Materialinformationen mit der gleichen Material- oder Partikeleigenschaft korrelieren.

Nach Einschätzung der Erfinder der vorliegenden Erfindung ist es besonders vorteilhaft, wenn die Detektion raum- und/oder zeitaufgelöst erfolgt, was vor allem vom übrigen Aufbau der Anlage und der Frage, ob diese kontinuierlich betrieben wird, abhängt. Insbesondere in Schritt d) ist eine solche Auflösung vorteilhaft, da sie eine genauere Aussonderung von Verunreinigungen ermöglicht und den Ausschuss an Material minimiert. Auch in Schritt e) ist eine entsprechende Auflösung jedoch vorteilhaft, da eine Abweichung zum Materialkriterium beispielsweise ggf. nur lokal besteht, sodass zumindest Teile des aufbereiteten Materials als recycelter Schrott ausgegeben werden können. Eine zeitliche Auflösung ermöglicht im kontinuierlichen oder halbkontinuierlichen Betrieb des Verfahrens zudem eine Korrelation der Materialinformationen mit der jeweils ausgegebenen Fraktion des recycelten Schrotts. Bevorzugt ist folglich ein erfindungsgemäßes Verfahren, wobei die zumindest eine erste Materialinformation und/oder die zumindest eine zweite Materialinformation, bevorzugt sämtliche Materialinformationen, mit einer räumlichen und/oder zeitlichen, bevorzugt einer räumlichen und zeitlichen, Auflösung detektiert werden, sodass jeweils ein räumlich und/oder zeitlich aufgelöstes Informationsprofil erhalten wird. Bevorzugt ist folglich ebenfalls ein erfindungsgemäßes Verfahren, wobei das Analysieren in Schritt d) und/oder Schritt e), bevorzugt in Schritt d) und Schritt e), mit räumlich und zeitlich aufgelösten Messmethoden erfolgt.

Insbesondere durch diese bevorzugte Verfahrensführung wird es in synergistischer Weise möglich, die bestimmten Materialinformationen, insbesondere die zweite Materialinformation, gleichzeitig zur Spezifizierung, Zertifizierung und Qualifizierung des ausgegebenen recycelten Schrottes zu verwenden, sodass dieser auch in solchen Anwendungen eingesetzt werden kann, die hohe Anforderungen, insbesondere aus sicherheitstechnischen Gründen, an das Schrottprodukt stellen.

Bevorzugt ist deshalb ein erfindungsgemäßes Verfahren, wobei die zumindest eine erste Materialinformation und/oder die zumindest eine zweite Materialinformation, bevorzugt die zumindest eine zweite Materialinformation, auf der Speichereinheit einer Datenverarbeitungsvorrichtung gespeichert wird, wobei die Materialinformationen bevorzugt mit zumindest einer Betriebsinformation, bevorzugt einer Zeitinformation, korreliert werden, sodass die jeweiligen Materialinformationen einem Teil des recycelten Schrotts zugeordnet werden können, wobei die jeweiligen Materialinformationen bevorzugt über ein Zertifikat, bevorzugt ein digitales Zertifikat, dem jeweils ausgegebenen Teil des recycelten Schrotts beigefügt werden.

Im Zuge der eigenen Versuche konnten die Erfinder der vorliegenden Erfindung besonders geeignete Detektionsmethoden bzw. die damit verbundenen entsprechenden Detektionsvorrichtungen identifizieren. Mit diesen Methoden wurden ausgezeichnete Reinheitsgrade erhalten, wobei es sich als besonders vorteilhaft erwiesen hat, jeweils mehrere Messmethoden vorzusehen. Bevorzugt ist nämlich ein erfindungsgemäßes Verfahren, wobei das Analysieren in Schritt d) und/oder Schritt e), bevorzugt in Schritt d) und Schritt e), mit einer oder mehr, bevorzugt zwei oder mehr, unterschiedlichen Methoden erfolgt, die ausgewählt sind aus der Gruppe bestehend aus Röntgenfluoreszenzanalyse, optischer Bilderkennung, bevorzugt unter Einsatz von künstlicher Intelligenz, und IR-Absorptionsspektroskopie, insbesondere NIR-Absorptionsspektroskopie. Hierbei dient die Röntgenfluoreszenzanalyse beispielsweise der Bestimmung des Elementgehalts und die IR/NIR-Absorptionsspektroskopie beispielsweise der Bestimmung des Organikgehalts.

Grundsätzlich ist es möglich, in den Schritten d) und e) die gleichen Arten an Detektionsvorrichtungen einzusetzen und als erste und zweite Materialinformation(en) die gleichen Messwerttypen zu detektieren bzw. diese aus den gleichen Datentypen, beispielsweise Bilder, abzuleiten. Die Erfinder der vorliegenden Erfindung haben jedoch erkannt, dass es vorteilhaft ist, unterschiedliche Detektionsverfahren einzusetzen, gerade wenn mit diesen Materialinformationen detektiert werden können, die mit der gleichen Material- oder Partikeleigenschaft korrelieren. Hierdurch ist es nämlich in synergistischer Weise möglich, Messfehler zu minimieren und etwaige Unzulänglichkeiten der verschiedenen Methoden untereinander auszugleichen und hierdurch eine noch höhere Genauigkeit in der Aufbereitung zu erzielen. Bevorzugt ist folglich ein erfindungsgemäßes Verfahren, wobei die erste und die zweite Materialinformation mit unterschiedlichen Detektionsverfahren detektiert werden, wobei die erste und die zweite Materialinformation bevorzugt mit der gleichen Material- oder Partikeleigenschaft korreliert.

Wie zuvor erläutert, kann es als großer Vorteil des erfindungsgemäßen Verfahrens angesehen werden, dass sich damit auch im kontinuierlichen Betrieb ausgezeichnete Ergebnisse erzielen lassen, wodurch eine besonders zeit- und kosteneffiziente Verfahrensführung möglich wird. Ganz besonders bevorzugt ist somit ein erfindungsgemäßes Verfahren, wobei das Verfahren ein kontinuierliches oder halbkontinuierliches Verfahren ist, wobei bevorzugt das zerkleinerte Material und/oder das vorgereinigte Material und/oder das aufgereinigte Material, bevorzugt sämtliche dieser Materialien, zumindest teilweise über Förderbänder und/oder Vibrationsförderrinnen geführt werden.

Mit dem erfindungsgemäßen Verfahren lässt sich vorteilhafterweise in großen Mengen recycelter Schrott erhalten, der reproduzierbar über besonders günstige Eisengehalte, Formfaktoren und/oder Schüttdichten verfügt. Entsprechend ist es besonders vorteilhaft, das erfindungsgemäße Verfahren auch so zu betreiben, dass die entsprechenden Parameter erreicht werden, da sich in diesen Fällen die Vorteile gegenüber dem Stand der Technik besonders deutlich zeigen.

Bevorzugt ist entsprechend ein erfindungsgemäßes Verfahren, wobei der recycelte Schrott eine maximale Partikelgröße von 100 mm oder weniger, bevorzugt 80 mm oder weniger, besonders bevorzugt 60 mm oder weniger aufweist.

Bevorzugt ist auch ein erfindungsgemäßes Verfahren, wobei der recycelte Schrott eine mittlere Partikelgröße im Bereich von 60 bis 250 mm, bevorzugt 80 bis 200 mm, besonders bevorzugt 100 bis 150 mm, aufweist.

Bevorzugt ist ebenso ein erfindungsgemäßes Verfahren, wobei der recycelte Schrott einen mittleren Formfaktor von Länge/Breite im Bereich von 1 bis 5, bevorzugt von 1 bis 2,5, besonders bevorzugt von 1 bis 1,25, aufweist, wobei die Partikel des recycelten Schrotts ganz besonders bevorzugt im Wesentlichen kugelförmig sind.

Bevorzugt ist insbesondere ein erfindungsgemäßes Verfahren, wobei der recycelte Schrott eine Schüttdichte von 1,0 t/m³ oder mehr, bevorzugt 1,2 t/m³ oder mehr, besonders bevorzugt 1,5 t/m³ oder mehr aufweist.

Bevorzugt ist zudem ein erfindungsgemäßes Verfahren, wobei der recycelte Schrott einen Eisengehalt von 97 % oder mehr, bevorzugt 98 % oder mehr, besonders bevorzugt 99 % oder mehr, aufweist, bezogen auf die Masse des recycelten Schrotts.

Ausgehend von dem erfindungsgemäßen Verfahren haben die Erfinder der vorliegenden Erfindung zudem eine besonders vorteilhafte Weiterentwicklung identifiziert, die in synergistischer Weise mit dem Aufbau des erfindungsgemäßen Verfahrens zusammenwirkt. Hierbei handelt es sich um bis zu drei sogenannte Rückkopplungen, über die das Verfahren gesteuert und optimiert werden kann.

Bei den ersten zwei Rückkopplungen werden die bei der Aufbereitung des Schrottes im erfindungsgemäßen Verfahren ohnehin detektierten Materialinformationen verwendet, um auch die einzelnen Schritte des erfindungsgemäßen Verfahrens in Abhängigkeit der aufgenommenen Materialinformationen zu steuern.

Bevorzugt ist ein erfindungsgemäßes Verfahren mit einer sogenannten ersten Rückkopplung, wobei die Zusammensetzung der inhomogenen eisenhaltigen Schrottzusammensetzung in Abhängigkeit von der ersten Materialinformation und/oder der zweiten Materialinformation, bevorzugt der ersten Materialinformation und der zweiten Materialinformation, gesteuert wird, besonders bevorzugt durch Veränderung des relativen Massenverhältnisses von zwei oder mehr eisenhaltigen Schrottfraktionen in der inhomogenen eisenhaltigen Schrottzusammensetzung.

Durch diese Verfahrensführung ist es möglich, auf Abweichungen in der Beschaffenheit des Schrottes, insbesondere der chemischen Zusammensetzung, aktiv zu reagieren und die Auswahl der Ausgangsmaterialien im vorderen Teil des Verfahrens aktiv zu steuern. Bevorzugt erfolgt dies unter Einsatz einer Datenverarbeitungsvorrichtung, die bevorzugt ein neuronales Netzwerk oder eine vergleichbare künstliche Intelligenz, bevorzugt ein neuronales Netzwerk, umfasst, welches darauf trainiert ist, auf registrierte Abweichungen der Materialinformationen von den entsprechenden vorbestimmten Sollwerten, insbesondere dem Materialkriterium, mit einer Veränderung des relativen Massenverhältnisses von zwei oder mehr eisenhaltigen Schrottfraktionen bei der Herstellung der inhomogenen eisenhaltigen Schrottzusammensetzung zu reagieren, die dazu geeignet ist, die festgestellte Abweichung zu korrigieren. Da die ersten Materialinformationen früher im Verfahren detektiert werden, kann es bedingt durch die dann schnellere Reaktion des Verfahrens vorteilhaft sein, diese erste Rückkopplung auf Grundlage der ersten Materialinformation vorzunehmen.

Bevorzugt ist ein erfindungsgemäßes Verfahren mit einer sogenannten zweiten Rückkopplung, wobei das Zerkleinern in Schritt b) in Abhängigkeit von der ersten Materialinformation und/oder der zweiten Materialinformation, bevorzugt der ersten Materialinformation und der zweiten Materialinformation, gesteuert wird, wobei bevorzugt ein oder mehr Betriebsparameter des Zerkleinerungsaggregates geändert werden, die ausgewählt sind aus der Gruppe bestehend aus der Größe des Zerkleinerungsraumes, der Größe der im Austrittsbereich zur Verfügung stehende Austrittsfläche und der Geschwindigkeit des mit Hämmern bestückten Rotors. Auch wenn der Grundgedanke mit dem der ersten Rückkopplung vergleichbar ist, wird in der zweiten Rückkopplung nicht die Zusammensetzung der inhomogenen eisenhaltigen Schrottzusammensetzung in Abhängigkeit der detektierten Materialinformationen gesteuert, sondern die Betriebsparameter des Zerkleinerungsaggregats, wobei die Größe des Partikelauslasses die bevorzugte Stellgröße ist. Diese Rückkopplung kann besonders effizient eingesetzt werden, wenn das erfindungsgemäße Verfahren mit dem erfindungsgemäßen Zerkleinerungsaggregat betrieben wird. Auch die Steuerung des Schrittes b) erfolgt bevorzugt unter Einsatz einer Datenverarbeitungsvorrichtung, die bevorzugt ein neuronales Netzwerk oder eine vergleichbare künstliche Intelligenz, bevorzugt ein neuronales Netzwerk, umfasst, welches darauf trainiert ist, auf registrierte Abweichungen der Materialinformationen von den entsprechenden vorbestimmten Sollwerten, insbesondere dem Materialkriterium, mit einer Veränderung der Betriebsparameter des Zerkleinerungsaggregates zu reagieren, die dazu geeignet ist, die festgestellte Abweichung zu korrigieren.

Die verbleibende dritte Rückkopplung greift auf Materialinformationen zu, die nicht im erfindungsgemäßen Verfahren, sondern im Zuge der weiteren Verarbeitung detektiert werden, wobei grundsätzlich die gleichen Ausführungen zutreffen, die vorstehend für die Detektion der ersten und zweiten Materialinformation ausgeführt wurden. Diese wird an einem Produkt, bspw. einer Zusammensetzung oder einem Umsetzungsprodukt, detektiert, welches durch Verarbeitung des recycelten Schrottes erhalten wurde, und kann beispielsweise die Materialzusammensetzung oder die Festigkeit betreffen. Die zumindest eine dritte Materialinformation wird dem Betrieb, der das erfindungsgemäße Verfahren benutzt, somit regelmäßig von außen, beispielsweise von Abnehmern von Kühlschrotten für den Einsatz im Konverter, bereitgestellt werden.

Bevorzugt ist ein erfindungsgemäßes Verfahren mit einer sogenannten dritten Rückkopplung, wobei bei der weiteren Verarbeitung des recycelten Schrotts zumindest eine dritte Materialinformation detektiert wird, wobei die Zusammensetzung der inhomogenen eisenhaltigen Schrottzusammensetzung, bevorzugt das relative Massenverhältnis der eisenhaltigen Schrottfraktionen in der inhomogenen eisenhaltigen Schrottzusammensetzung bevorzugt wie vorstehend als bevorzugt bezeichnet, und/oder das Zerkleinern in Schritt b), bevorzugt wie vorstehend als bevorzugt bezeichnet, und/oder die Abtrennung in Schritt c) in Abhängigkeit von der zumindest einen dritten Materialinformation gesteuert wird. Auch hierbei ist der Einsatz eines neuronalen Netzwerkes oder einer vergleichbaren künstlichen Intelligenz, bevorzugt eines neuronalen Netzwerkes, vorteilhaft.

Bevorzugt umfasst das erfindungsgemäße Verfahren zumindest die erste und die zweite Rückkopplung, besonders bevorzugt die erste, die zweite und die dritte Rückkopplung.

Die Erfindung betrifft zudem einen recycelten Schrott, hergestellt oder herstellbar mit dem erfindungsgemäßen Verfahren, wobei der Anteil von Eisen im recycelten Schrott 97 Gew.-% oder mehr, bevorzugt 98 Gew.-% oder mehr, besonders bevorzugt, 99 Gew.-% oder mehr, beträgt, bezogen auf die Masse des recycelten Schrotts. Entsprechender erfindungsgemäßer recycelter Schrott ist besonders vorteilhaft, weil er auch für anspruchsvolle Anwendungen geeignet ist und hinsichtlich seiner Qualität nahezu an neu hergestellte Metalle heranreicht.

Die Erfindung betrifft darüber hinaus eine Anlage zum Recycling von Schrott, vorzugsweise zur Durchführung des erfindungsgemäßen Verfahrens, umfassend:
- zumindest ein Zerkleinerungsaggregat zum Zerkleinern einer inhomogenen, eisenhaltigen Schrottzusammensetzung, bevorzugt ein erfindungsgemäßes Zerkleinerungsaggregat,
- Mittel zum Abtrennen von organischen und/oder metallischen Verunreinigungen aus dem zerkleinerten Material,
- Eine oder mehrere erste Detektionsvorrichtungen zum Analysieren des nach dem Abtrennen erhaltenen Materials zur Detektion einer ersten Materialinformation,
- Mittel zum automatisierten Aussondern von Teilen aus dem nach dem Abtrennen erhaltenen Material in Abhängigkeit von der ersten Materialinformation,
- Eine oder mehrere zweite Detektionsvorrichtungen zum Analysieren des nach dem Aussondern erhaltenen Materials zur Detektion einer zweiten Materialinformation, und
- Eine Datenverarbeitungsvorrichtung, die dazu eingerichtet ist, die zweite Materialinformation mit einem zugeordneten vorgegebenen Materialkriterium abzugleichen und das in der Vorrichtung aufgereinigte Material als recycelter Schrott auszugeben, wenn die zweite Materialinformation das zugeordnete vorgegebene Materialkriterium erfüllt.

Die erfindungsgemäße Anlage ist vorteilhaft, weil sie zur Durchführung des erfindungsgemäßen Verfahrens geeignet ist. Besonders bevorzugt sind erfindungsgemäße Anlagen, die zusätzliche Bestandteile umfassen, die zur Durchführung des erfindungsgemäßen Verfahrens in bevorzugten Ausführungsformen benötigt werden, insbesondere spezifische Zerkleinerungsaggregate, Abtrennvorrichtungen und Detektionsvorrichtungen sowie Datenverarbeitungsvorrichtungen, die dazu eingerichtet sind, die vorstehend beschriebene erste, zweite und/oder dritte Rückkopplung zu realisieren.

Die Erfindung betrifft abschließend ein Zerkleinerungsaggregat für den Einsatz in einem erfindungsgemäßen Verfahren oder einer erfindungsgemäßen Anlage umfassend:
- einen Zerkleinerungsraum mit zumindest einem Austrittsbereich für zerkleinertes Material, und
- zumindest einen im Zerkleinerungsraum angeordneten und mit Hämmern bestückten Rotor,

wobei das Zerkleinerungsaggregat über ein verstellbares Element verfügt, das dazu eingerichtet ist, die im Austrittsbereich zur Verfügung stehende Austrittsfläche für das zerkleinerte Material aus dem Zerkleinerungsraum zu steuern, und
wobei das Zerkleinerungsaggregat im oberen Teil des Zerkleinerungsraums über einen ersten Austrittsbereich mit einem ersten verstellbaren Element verfügt, das dazu eingerichtet ist, die im ersten Austrittsbereich zur Verfügung stehende Austrittsfläche für das zerkleinerte Material aus dem Zerkleinerungsraum zu steuern und wobei das Zerkleinerungsaggregat im Boden des Zerkleinerungsraums über einen zweiten Austrittsbereich mit einem zweiten verstellbaren Element verfügt, das dazu eingerichtet ist, die im zweiten Austrittsbereich zur Verfügung stehende Austrittsfläche für das zerkleinerte Material aus dem Zerkleinerungsraum zu steuern,
wobei das Zerkleinerungsaggregat bevorzugt über eine verstellbare Bodenplatte und/oder Deckplatte, besonders bevorzugt über eine hydraulisch verstellbare Bodenplatte und/oder Deckplatte, verfügt, mit denen die im Austrittsbereich zur Verfügung stehende Austrittsfläche der zerkleinerten Partikel aus dem Zerkleinerungsraum verändert werden kann.

Der Zerkleinerungsraum wird in Übereinstimmung mit dem fachmännischen Verständnis regelmäßig eine Einlassöffnung aufweisen, durch die die aufzubereitende Schrottzusammensetzung in den Zerkleinerungsraum gegeben werden kann und bei der es sich nicht um einen Austrittsbereich für zerkleinertes Material im Sinne der vorliegenden Erfindung handelt.

Dieses erfindungsgemäße Zerkleinerungsaggregat ist bevorzugt, weil es für den Einsatz im erfindungsgemäßen Verfahren optimiert ist und sich insbesondere die vorstehend beschriebene Steuerung des Verfahrensschrittes b) und die zweite Rückkopplung besonders gut realisieren lassen. Das erfindungsgemäße Zerkleinerungsaggregat ist im Vergleich zum Stand der Technik in der Lage, die mittlere Verweilzeit der Partikel im Zerkleinerungsraum auch während des Betriebs zu beeinflussen und somit beispielsweise Einfluss auf die Teilchengröße und den Reinigungsgrad des bearbeiteten Schrottes zu nehmen.

Erfindungsgemäß handelt es sich um ein erfindungsgemäßes Zerkleinerungsaggregat, wobei das Zerkleinerungsaggregat im oberen Teil des Zerkleinerungsraums über einen ersten Austrittsbereich mit einem ersten verstellbaren Element verfügt, das dazu eingerichtet ist, die im ersten Austrittsbereich zur Verfügung stehende Austrittsfläche für das zerkleinerte Material aus dem Zerkleinerungsraum zu steuern und wobei das Zerkleinerungsaggregat im Boden des Zerkleinerungsraums über einen zweiten Austrittsbereich mit einem zweiten verstellbaren Element verfügt, das dazu eingerichtet ist, die im zweiten Austrittsbereich zur Verfügung stehende Austrittsfläche für das zerkleinerte Material aus dem Zerkleinerungsraum zu steuern. Dieses erfindungsgemäße Zerkleinerungsaggregat ist besonders bevorzugt, weil sich damit -nach Einschätzung der Erfinder erstmalig- ein Zerkleinerungsaggregat erhalten lässt, welches flexibel, d.h. beispielsweise auch im Betrieb, zwischen einem Schredder und einem Zerdirator verstellt werden kann. Besonders bevorzugt ist somit ein erfindungsgemäßes Zerkleinerungsaggregat, welches durch Verstellen eines oder mehrerer Elemente im Austrittsbereich des Zerkleinerungsraums als Schredder und als Zerdirator betrieben werden kann.

Ganz besonders bevorzugt ist ein erfindungsgemäßes Verfahren, welches ein oder mehrere Merkmale der vorstehend angegebenen bevorzugten Verfahren miteinander vereint, wobei das Zerkleinerungsaggregat eine Schallschutzeinhausung aufweist.

Ganz besonders bevorzugt ist ein erfindungsgemäßes Verfahren, welches ein oder mehrere Merkmale der vorstehend angegebenen bevorzugten Verfahren miteinander vereint, wobei das Zerkleinerungsaggregat über ein Fundament im Boden verankert ist.

Ganz besonders bevorzugt ist ein erfindungsgemäßes Verfahren, welches ein oder mehrere Merkmale der vorstehend angegebenen bevorzugten Verfahren miteinander vereint, wobei die Schrottzusammensetzung und/oder das zerkleinerte Material und/oder das vorgereinigte Material und/oder das aufgereinigte Material gewogen werden.

Ganz besonders bevorzugt ist ein erfindungsgemäßes Verfahren, welches ein oder mehrere Merkmale der vorstehend angegebenen bevorzugten Verfahren miteinander vereint, wobei das Verfahren über eine Steuereinheit gesteuert wird.

Ganz besonders bevorzugt ist ein erfindungsgemäßes Verfahren, welches ein oder mehrere Merkmale der vorstehend angegebenen bevorzugten Verfahren miteinander vereint, wobei im Falle von Störungen ein akustisches oder optisches Warnsignal ausgegeben wird.

Ganz besonders bevorzugt ist ein erfindungsgemäßes Verfahren, welches ein oder mehrere Merkmale der vorstehend angegebenen bevorzugten Verfahren miteinander vereint, wobei das Zerkleinerungsaggregat zu mehr als 75 Gew.% aus Stahl ausgebildet ist.

Ganz besonders bevorzugt ist ein erfindungsgemäßes Verfahren, welches ein oder mehrere Merkmale der vorstehend angegebenen bevorzugten Verfahren miteinander vereint, wobei der ausgegebene Recycelte Schrott auf einer Halde gelagert wird.

Ganz besonders bevorzugt ist ein erfindungsgemäßes Verfahren, welches ein oder mehrere Merkmale der vorstehend angegebenen bevorzugten Verfahren miteinander vereint, wobei der ausgegebene Recycelte Schrott auf einem Lastkraftwagen, einem Güterzug oder einem Schiff, bevorzugt mit einem Güterzug oder einem Schiff, abtransportiert wird.

Ganz besonders bevorzugt ist ein erfindungsgemäßes Verfahren, welches ein oder mehrere Merkmale der vorstehend angegebenen bevorzugten Verfahren miteinander vereint, wobei das Verfahren über einen Notfallschalter unterbrochen werden kann.

Ganz besonders bevorzugt ist eine erfindungsgemäße Anlage, welche ein oder mehrere Merkmale der vorstehend angegebenen bevorzugten Anlagen miteinander vereint, wobei die Anlage eine Signal- und/oder Warnvorrichtung umfasst.

Ganz besonders bevorzugt ist eine erfindungsgemäße Anlage, welche ein oder mehrere Merkmale der vorstehend angegebenen bevorzugten Anlagen miteinander vereint, wobei die Anlage einen Notfallschalter zum Stopp der Anlage umfasst.

Ganz besonders bevorzugt ist eine erfindungsgemäße Anlage, welche ein oder mehrere Merkmale der vorstehend angegebenen bevorzugten Anlagen miteinander vereint, wobei das Zerkleinerungsaggregat zu mehr als 75 Gew.% aus Stahl ausgebildet ist.

Ganz besonders bevorzugt ist eine erfindungsgemäße Anlage, welche ein oder mehrere Merkmale der vorstehend angegebenen bevorzugten Anlagen miteinander vereint, wobei die Anlage eine Steuervorrichtung zur Steuerung der Anlage umfasst.

Ganz besonders bevorzugt ist eine erfindungsgemäße Anlage, welche ein oder mehrere Merkmale der vorstehend angegebenen bevorzugten Anlagen miteinander vereint, wobei die Anlage eine Gesamtlänge von mehr als 5 m, bevorzugt mehr als 10 m, besonders bevorzugt mehr als 15 m, aufweist.

Ganz besonders bevorzugt ist ein erfindungsgemäßes Zerkleinerungsaggregat, welches ein oder mehrere Merkmale der vorstehend angegebenen bevorzugten Zerkleinerungsaggregate miteinander vereint, wobei das Zerkleinerungsaggregat über ein Fundament verfügt, bevorzugt ein Betonfundament.

Ganz besonders bevorzugt ist ein erfindungsgemäßes Zerkleinerungsaggregat, welches ein oder mehrere Merkmale der vorstehend angegebenen bevorzugten Zerkleinerungsaggregate miteinander vereint, wobei das Zerkleinerungsaggregat über Hämmer aus Stahl verfügt.

Ganz besonders bevorzugt ist ein erfindungsgemäßes Zerkleinerungsaggregat, welches ein oder mehrere Merkmale der vorstehend angegebenen bevorzugten Zerkleinerungsaggregate miteinander vereint, wobei das Zerkleinerungsaggregat eine Bedieneinrichtung umfasst.

Ganz besonders bevorzugt ist ein erfindungsgemäßes Zerkleinerungsaggregat, welches ein oder mehrere Merkmale der vorstehend angegebenen bevorzugten Zerkleinerungsaggregate miteinander vereint, wobei das Zerkleinerungsaggregat ein Gewicht von mehr als 100 kg, bevorzugt mehr als 200 kg aufweist.

Ganz besonders bevorzugt ist ein erfindungsgemäßes Zerkleinerungsaggregat, welches ein oder mehrere Merkmale der vorstehend angegebenen bevorzugten Zerkleinerungsaggregate miteinander vereint, wobei das Zerkleinerungsaggregat zu mehr als 75 Gew.% aus Stahl ausgebildet ist.

Nachfolgend werden das erfindungsgemäße Verfahren und die dafür verwendete erfindungsgemäße Anlage in der bevorzugten Ausführungsform näher erläutert, die von den Erfindern der vorliegenden Erfindung im Zuge der umfassenden Optimierung als besonders vorteilhaft identifiziert werden konnte und mit der recycelter Schrott im großtechnischen Maßstab erzeugt werden kann, welcher bei nahezu vollständiger Organik-Freiheit einen Eisengehalt von mehr als 97 %, sowie Schüttdichten etwa 1,5 t/m³ mit annähernd sphärischen Partikeln, d.h. einem Formfaktor von etwa 1 und eine maximale Partikelgröße von etwa 80 mm aufweist.

Das Verfahren wird als kontinuierliches Verfahren betrieben, wobei das verarbeitete Material über Förderbänder gefördert wird.

Als Ausgangsmaterial wird eine inhomogene eisenhaltige Schrottzusammensetzung hergestellt. Die Herstellung erfolgt im Zulauf eines Zerkleinerungsaggregates durch Mischen von Schrott aus mehreren eisenhaltigen Schrottfraktionen, nämlich weißer Ware, Rücklaufschrotten, Schreddervormaterialien und gepressten Altfahrzeugen.

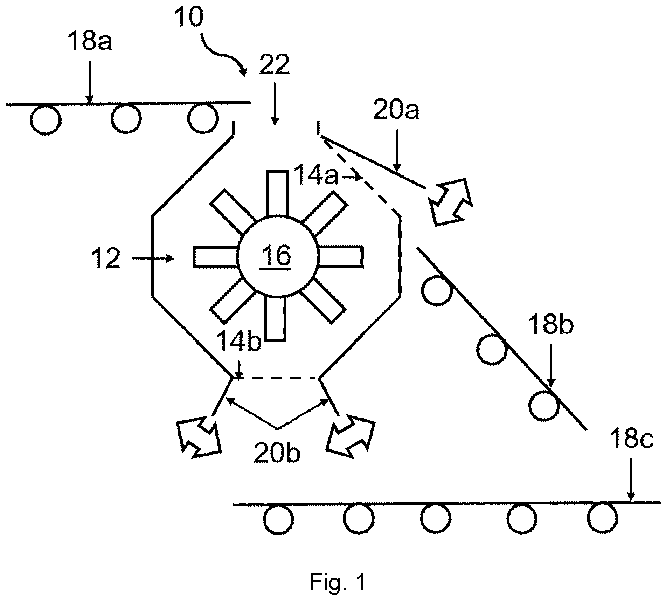

Die inhomogene eisenhaltige Schrottzusammensetzung wird in einem erfindungsgemäßen Zerkleinerungsaggregat gemäß Fig. 1 zerkleinert, das über eine hydraulisch verstellbare Bodenplatte und Deckplatte, verfügt, mit denen die zur Verfügung stehende Austrittsfläche des zerkleinerten Materials aus dem Zerkleinerungsraum verändert werden kann. Hierdurch kann die mittlere Verweilzeit der Partikel im Zerkleinerungsraum und die mittlere Partikelgröße des zerkleinerten Materials gesteuert werden. Durch die im Boden des Zerkleinerungsraums angeordnete verstellbare Bodenplatte kann der untere Austrittsbereich geschlossen werden, so dass nur der im oberen Teil des Zerkleinerungsraums angeordnete Austrittsbereich verbleibt. Hierdurch kann das erfindungsgemäße Zerkleinerungsaggregat als Schredder und als Zerdirator betrieben werden. Das Zerkleinerungsaggregat wird in den durchgeführten Versuchen zumeist als Schredder betrieben.

Zudem weist das Zerkleinerungsaggregat eine Trockenentstaubungsanlage mit mehreren Aktivkohlefiltern auf.

Das geschredderte Material wird zum Abtrennen von organischen und anorganischen Verunreinigungen aus dem zerkleinerten Material und zum Erhalt eines vorgereinigten Materials durch eine Trennanordnung geführt.

Die Trennanordnung umfasst hintereinander eine in üblicher Weise ausgeführte Langteilseparation, einen Windsichter mit drei Kaskaden, zwei Magnetabscheider mit einstellbaren Elektromagneten zur Magnetabscheidung und ein Sieb.

Der Materialstrom wird mit zwei ersten Detektionsvorrichtungen analysiert. Eine Kamera detektiert Materialinformationen betreffend die Form und Größe der Teile im vorgereinigten Material und ein kontinuierlich arbeitendes NIR-Spektrometer bestimmt als Materialinformation Messwerte, die mit der chemischen Zusammensetzung des untersuchten Materials korrelieren. Über eine Computersteuerung werden diese räumlich und zeitlich aufgelösten Materialinformationen an einen Robotersortierer geleitet, der auf Grundlage der bereitgestellten Daten identifizierte Verunreinigungen bzw. Teile, welche vorbestimmte Anforderungen nicht erfüllen, im Rahmen der sensorgestützten Sortierung aussondert.

Anschließend durchläuft das aufgereinigte Material auf dem Förderband einen weiteren Bereich, in dem es erneut analysiert wird. Als Detektionsvorrichtungen kommen hierbei erneut ein kontinuierlich arbeitendes NIR-Spektrometer und zusätzlich ein Röntgenfluoreszenzspektrometer zum Einsatz, wobei letzteres komplementäre Informationen zur chemischen Zusammensetzung liefert (eine erneute Kontrolle der Abmessungen der Partikel, bspw. mit einer Kamera, erfolgt im vorliegenden Prozess nicht, kann aber vorgesehen werden). Die hierbei aufgenommenen Materialinformationen werden mittels einer Datenverarbeitungsvorrichtung mit zugeordneten vorgegebenen Materialkriterien abgeglichen, die vorliegend auf die Anwesenheit von ausgewählten organischen und metallischen Verunreinigungen, insbesondere Kupfer, ausgerichtet waren.

Bei Erfüllen sämtlicher Materialkriterien wurde das erhaltene Material als recycelter Schrott ausgegeben und über ein Förderband zu einer Lagerhalde geführt.

Die detektierten zweiten Materialinformationen werden auf einem Computer gespeichert und mit dem Herstellzeitpunkt bzw. Ausgabezeitpunkt verknüpft. Diese Materialinformationen werden mit der entsprechenden Charge über ein digitales Zertifikat verknüpft, welches in der späteren Anwendung dem Kunden zur Verfügung gestellt werden kann und welches eine Qualifizierung des Schrottprodukts für bestimmte Anwendungen erlaubt.

Die entsprechende Anlage ist mit einer Computersteuerung versehen, die die Umsetzung von verschiedenen Rückkopplungen ermöglicht, d.h. der Steuerung des Prozesses in Abhängigkeit von den detektierten Materialeigenschaften. In dieser Ausführungsform wurden die Betriebsparameter des Zerkleinerungsaggregats, genauer die Leistung und die Anstellung der beweglichen Platten im Austrittsbereich in Abhängigkeit von der ersten Materialinformation gesteuert, die über die Kamera detektiert wird. Die Veränderung der Zusammensetzung der inhomogenen eisenhaltigen Schrottzusammensetzung erfolgte in Abhängigkeit von den NIR-Messungen bzw. von der Röntgenfluoreszenzmessung. Zum jetzigen Entwicklungsstand erfolgt diese Anpassung durch eine visuelle Anweisung an einen Baggerführer, die diesem über ein Display angezeigt wird und anzeigt, welche Mengen der Schrottfraktionen eingegeben werden sollten. Hier ist jedoch eine automatisierte Zufuhr die angestrebte Lösung.

Das Verfahren und die Anlage sind dazu eingerichtet, von einem Verwerter des recycelten Stoffes eine dritte Materialinformation entgegenzunehmen und in Folge dieser dritten Materialinformation die Betriebsparameter des Zerkleinerungsaggregats und die Zusammensetzung der inhomogenen eisenhaltigen Schrottzusammensetzung zu steuern. Obwohl diese Rückkopplung in Ermangelung eines realen Verwerters zum jetzigen Zeitpunkt nur mit fiktiven Erfahrungswerten getestet werden kann, funktioniert die Anpassung der Anlage erfindungsgemäß.

Durch die kontinuierliche Detektion von Materialinformationen, die davon abgeleitete Steuerung des Prozesses und der anschließenden Detektion der Auswirkung durch die selben Detektionseinrichtungen können vorteilhafterweise umfassende Datensätze gewonnen werden, die das Training eines neuronalen Netzwerkes ermöglichen, um die Rückkopplungen noch genauer zu machen und den Bedarf an fachmännischem Erfahrungswissen bestmöglich zu reduzieren.

Nachfolgend werden das erfindungsgemäße Zerkleinerungsaggregat und dessen bevorzugte Ausführungsformen unter Bezugnahme auf die beiliegende Figur näher erläutert und beschrieben. In der Figur zeigt dabei:
- Fig. 1: eine schematische Querschnittsdarstellung eines erfindungsgemäßen Zerkleinerungsaggregats in einer besonders bevorzugten Ausführungsform.

Fig. 1 zeigt beispielhaft eine schematische Querschnittsdarstellung eines bevorzugten erfindungsgemäßen Zerkleinerungsaggregats 10.

Das Zerkleinerungsaggregat 10 ist insbesondere für den Einsatz in einem erfindungsgemäßen Verfahren bzw. in einer erfindungsgemäßen Anlage geeignet und umfassend einen Zerkleinerungsraum 12.

Der Zerkleinerungsraum 12 umfasst eine Einlassöffnung 22, durch die die Schrottzusammensetzung in den Zerkleinerungsraum 12 gegeben werden kann, welche beispielsweise über ein Förderband 18a zugeführt wird. Zudem umfasst der Zerkleinerungsraum 12 zwei Austrittsbereiche 14a, 14b.

Der erste Austrittsbereich 14a ist im oberen Teil des Zerkleinerungsraums 12 angeordnet und weist ein erstes verstellbares Element 20a auf, das dazu eingerichtet ist, die im Austrittsbereich 14a zur Verfügung stehende Austrittsfläche des zerkleinerten Materials aus dem Zerkleinerungsraum 12 zu begrenzen. Das erste verstellbare Element 20a ist vorliegend als hydraulisch verstellbare Deckplatte ausgebildet.

Der zweite Austrittsbereich 14b ist im Boden des Zerkleinerungsraums 12 angeordnet und weist ein zweites verstellbares Element 20b auf, das dazu eingerichtet ist, die im Austrittsbereich 14b zur Verfügung stehende Austrittsfläche des zerkleinerten Materials aus dem Zerkleinerungsraum 12 zu begrenzen. Das zweite verstellbare Element 20b ist vorliegend als hydraulisch verstellbare Bodenplatte ausgebildet, die zweiteilig in Form einer Klappe mit zwei Flügeln ausgeführt ist.

In Fig. 1 wird die Verstellbarkeit der verstellbaren Elemente 20a, 20b durch Doppelpfeile angedeutet. Die Austrittsbereiche 14a, 14b sind jeweils durch Gitterroste bedeckt, die einen Austritt von zu großen Partikeln aus dem Zerkleinerungsraum 12 verhindern. Die Roste in den Austrittsbereichen 14a, 14b können bevorzugt mit einstellbaren Maschenweiten und/oder reversibel und zerstörungsfrei auswechselbar ausgebildet werden.

Im Zerkleinerungsraum 12 wird die Schrottzusammensetzung durch den mit Hämmern bestückten Rotor 16 zerkleinert. Die zerkleinerten Partikel gelangen nach einer gewissen Verweilzeit im Zerkleinerungsraum 12 durch einen der Austrittsbereiche 14a, 14b aus dem Zerkleinerungsaggregat 10 und können beispielsweise über Förderbänder 18b, 18c der weiteren Verarbeitung zugeführt werden.

Durch die Steuerung der verstellbaren Elemente 20a, 20b kann die mittlere Verweilzeit der Partikel im Zerkleinerungsraum 12 gesteuert werden. Durch das zweite verstellbare Element 20b kann zudem der zweite Austrittsbereich 14b vollständig geschlossen werden, so dass das Zerkleinerungsaggregat 10 vom Zerdiratorbetrieb in den Schredderbetrieb überführt werden kann.

### Bezugszeichen

- 10: Zerkleinerungsaggregat
- 12: Zerkleinerungsraum
- 14a-b: Austrittsbereich
- 16: Rotor
- 18a-c: Förderband
- 20a-b: verstellbares Element
- 22: Einlassöffnung

## Patentansprüche

1. Verfahren zur Herstellung von recyceltem Schrott, umfassend die folgenden Schritte:
a) Herstellen oder Bereitstellen einer inhomogenen, eisenhaltigen Schrottzusammensetzung,
b) Zerkleinern der inhomogenen, eisenhaltigen Schrottzusammensetzung in einem Zerkleinerungsaggregat (10) zum Erhalt eines zerkleinerten Materials,
c) Abtrennen von organischen und/oder anorganischen Verunreinigungen aus dem zerkleinerten Material zum Erhalt eines vorgereinigten Materials,
d) Analysieren des vorgereinigten Materials mit einer oder mehreren ersten Detektionsvorrichtungen zur Detektion zumindest einer ersten Materialinformation und Aussondern von Bestandteilen des vorgereinigten Materials zum Erhalt eines aufgereinigten Materials, wobei das Aussondern in Abhängigkeit der ersten Materialinformation erfolgt, und
e) Analysieren des aufgereinigten Materials mit einer oder mehreren zweiten Detektionsvorrichtungen zur Detektion zumindest einer zweiten Materialinformation,
f) Abgleichen der detektierten zweiten Materialinformation mit einem der zweiten Materialinformation zugeordneten vorgegebenen Materialkriterium,
wobei das aufgereinigte Material als recycelter Schrott ausgegeben wird, wenn die zweite Materialinformation das zugeordnete vorgegebene Materialkriterium erfüllt.

2. Verfahren nach Anspruch 1, wobei das Abtrennen von organischen und/oder metallischen Verunreinigungen in Schritt c) zwei oder mehr unterschiedliche Arbeitsschritte umfasst, die ausgewählt sind aus der Gruppe bestehend aus Langteilseparation, Windsichtung, Magnetabscheidung und Absiebung.

3. Verfahren nach einem der Ansprüche 1 oder 2, wobei das Aussondern in Schritt d) durch eine automatisierte Vorrichtung erfolgt.

4. Verfahren nach einem der Ansprüche 1 bis 3, wobei die zumindest eine erste Materialinformation und/oder die zumindest eine zweite Materialinformation mit einer räumlichen und/oder zeitlichen Auflösung detektiert werden, sodass jeweils ein räumlich und/oder zeitlich aufgelöstes Informationsprofil erhalten wird, und/oder wobei das Analysieren in Schritt d) und/oder Schritt e) mit einer oder mehr unterschiedlichen Methoden erfolgt, die ausgewählt sind aus der Gruppe bestehend aus Röntgenfluoreszenzanalyse, optischer Bilderkennung, bevorzugt unter Einsatz von künstlicher Intelligenz, und IR-Absorptionsspektroskopie, insbesondere NIR-Absorptionsspektroskopie.

5. Verfahren nach einem der Ansprüche 1 bis 4, wobei die Zusammensetzung der inhomogenen eisenhaltigen Schrottzusammensetzung in Abhängigkeit von der ersten Materialinformation und/oder der zweiten Materialinformation gesteuert wird.

6. Verfahren nach einem der Ansprüche 1 bis 5, wobei das Zerkleinern in Schritt b) in Abhängigkeit von der ersten Materialinformation und/oder der zweiten Materialinformation gesteuert wird.

7. Verfahren nach einem der Ansprüche 1 bis 6, wobei bei der weiteren Verarbeitung des recycelten Schrotts zumindest eine dritte Materialinformation detektiert wird, wobei die Zusammensetzung der inhomogenen eisenhaltigen Schrottzusammensetzung und/oder das Zerkleinern in Schritt b) und/oder die Abtrennung in Schritt c) in Abhängigkeit von der zumindest einen dritten Materialinformation gesteuert wird.

8. Verfahren nach einem der Ansprüche 1 bis 7, wobei das Verfahren ein kontinuierliches oder halbkontinuierliches Verfahren ist.

9. Anlage zum Recycling von Schrott zur Durchführung des Verfahrens nach einem der Ansprüche 1 bis 8 umfassend:
- zumindest ein Zerkleinerungsaggregat (10) zum Zerkleinern einer inhomogenen, eisenhaltigen Schrottzusammensetzung,
- Mittel zum Abtrennen von organischen und/oder metallischen Verunreinigungen aus dem zerkleinerten Material,
- Eine oder mehrere erste Detektionsvorrichtungen zum Analysieren des nach dem Abtrennen erhaltenen Materials zur Detektion einer ersten Materialinformation,
- Mittel zum automatisierten Aussondern von Teilen aus dem nach dem Abtrennen erhaltenen Material in Abhängigkeit von der ersten Materialinformation,
- Eine oder mehrere zweite Detektionsvorrichtungen zum Analysieren des nach dem Aussondern erhaltenen Materials zur Detektion einer zweiten Materialinformation, und
- Eine Datenverarbeitungsvorrichtung, die dazu eingerichtet ist, die zweite Materialinformation mit einem zugeordneten vorgegebenen Materialkriterium abzugleichen und das in der Vorrichtung aufgereinigte Material als recycelter Schrott auszugeben, wenn die zweite Materialinformation das zugeordnete vorgegebene Materialkriterium erfüllt.

10. Zerkleinerungsaggregat (10) für den Einsatz in einem Verfahren nach einem der Ansprüche 1 bis 8 oder einer Anlage nach Anspruch 9, umfassend:
- einen Zerkleinerungsraum (12) mit zumindest einem Austrittsbereich (14a, 14b) für zerkleinertes Material, und
- zumindest einen im Zerkleinerungsraum (12) angeordneten und mit Hämmern bestückten Rotor (16),
wobei das Zerkleinerungsaggregat (10) über ein verstellbares Element (20a, 20b) verfügt, das dazu eingerichtet ist, die im Austrittsbereich (14a, 14b) zur Verfügung stehende Austrittsfläche des zerkleinerten Materials aus dem Zerkleinerungsraum (12) zu steuern, und
wobei das Zerkleinerungsaggregat (10) im oberen Teil des Zerkleinerungsraums (12) über einen ersten Austrittsbereich (14a) mit einem ersten verstellbaren Element (20a) verfügt, das dazu eingerichtet ist, die im ersten Austrittsbereich (14a) zur Verfügung stehende Austrittsfläche für das zerkleinerte Material aus dem Zerkleinerungsraum (12) zu steuern und wobei das Zerkleinerungsaggregat (10) im Boden des Zerkleinerungsraums (12) über einen zweiten Austrittsbereich (14b) mit einem zweiten verstellbaren Element (20b) verfügt, das dazu eingerichtet ist, die im zweiten Austrittsbereich (14b) zur Verfügung stehende Austrittsfläche für das zerkleinerte Material aus dem Zerkleinerungsraum (12) zu steuern.

## Claims

1. Process for producing recycled scrap comprising the steps of:
a) producing or providing an inhomogeneous, iron-containing scrap composition,
b) comminuting the inhomogeneous, iron-containing scrap composition in a comminution unit (10) to obtain a comminuted material,
c) separating organic and/or inorganic impurities from the comminuted material to obtain a pre-purified material,
d) analyzing the pre-purified material with one or more first detection apparatuses to detect at least one first material information and segregating constituents of the prepurified material to obtain a purified material, wherein the segregating is carried out according to the first material information and
e) analyzing the purified material with one or more second detection apparatuses to detect at least a second material information,
f) comparing the detected second material information with a predetermined material criterion assigned to the second material information,
wherein the purified material is discharged as recycled scrap when the second material information meets the assigned predetermined material criterion.

2. Process according to Claim 1, wherein the separating of organic and/or metallic impurities in step c) comprises two or more different operating steps selected from the group consisting of long fraction separation, windsifting, magnetic separation and sieving.

3. Process according to either of Claims 1 or 2, wherein the segregating in step d) is carried out by an automated apparatus.

4. Process according to any of Claims 1 to 3, wherein the at least one first material information and/or the at least one second material information are detected with a spatial and/or temporal resolution to obtain a spatially and/or temporally resolved information profile respectively and/or wherein the analyzing in step d) and/or step e) is carried out by one or more different methods selected from the group consisting of X-ray fluorescence analysis, optical image recognition, preferably using artificial intelligence, and IR absorption spectroscopy, in particular NIR absorption spectroscopy.

5. Process according to any of Claims 1 to 4, wherein the composition of the inhomogeneous iron-containing scrap composition is controlled according to the first material information and/or the second material information.

6. Process according to any of Claims 1 to 5, wherein the comminuting in step b) is controlled according to the first material information and/or the second material information.

7. Process according to any of Claims 1 to 6, wherein in the further processing of the recycled scrap at least a third material information is detected, wherein the composition of the inhomogeneous iron-containing scrap composition and/or the comminuting in step b) and/or the separating in step c) is controlled according to the at least one third material information.

8. Process according to any of Claims 1 to 7, wherein the process is a continuous or semicontinuous process.

9. Plant for recycling scrap by performing the process according to any of Claims 1 to 8 comprising:
- at least one comminuting unit (10) for comminuting an inhomogeneous, iron-containing scrap composition,
- means for separating organic and/or metallic impurities from the comminuted material,
- one or more first detection apparatuses for analyzing the material obtained after the separating to detect a first material information,
- means for automated segregation of fractions from the material obtained after the separating according to the first material information,
- one or more second detection apparatuses for analyzing the material obtained after the segregating to detect a second material information and
- a data processing apparatus adapted for comparing the second material information with an assigned predetermined material criterion and discharging the material purified in the apparatus as recycled scrap when the second material information meets the assigned predetermined material criterion.

10. Comminuting unit (10) for use in a process according to any of Claims 1 to 8 or a plant according to Claim 9 comprising:
- a comminuting space (12) having at least one discharging region (14a, 14b) for comminuted material and
- at least one rotor (16) arranged in the comminuting space (12) and fitted with hammers, wherein the comminuting unit (10) has an adjustable element (20a, 20b) which is adapted for controlling the discharging area for the comminuted material from the comminuting space (12) that is available in the discharging region (14a, 14b), and
wherein in the upper region of the comminuting space (12) the comminuting unit (10) has a first discharging region (14a) having a first movable element (20a) which is adapted for controlling the discharging area for the comminuted material from the comminuting space (12) that is available in the first discharging region (14a) and wherein in bottom of the comminuting space (12) the comminuting unit (10) has a second discharging region (14b) having a second movable element (20b) which is adapted for controlling the discharging area for the comminuted material from the comminuting space (12) that is available in the second discharging region (14b).

## Revendications

1. Procédé de production de déchets recyclés, comprenant les étapes suivantes :
a) fabrication et fourniture d'une composition inhomogène de déchets ferreux,
b) broyage de ladite composition inhomogène de déchets ferreux dans un groupe de broyage (10) pour obtenir un matériau broyé,
c) séparation des impuretés organiques et/ou inorganiques dudit matériau broyé pour obtenir un matériau pré-nettoyé,
d) analyse dudit matériau pré-nettoyé à l'aide d'un ou de plusieurs premiers dispositifs de détection pour détecter au moins une première information sur le matériau et pour trier des composants du matériau pré-nettoyé pour obtenir un matériau purifié, le triage s'effectuant en fonction de la première information sur le matériau, et
e) analyse dudit matériau purifié à l'aide d'un ou de plusieurs deuxièmes dispositifs de détection pour détecter au moins une deuxième information sur le matériau,
f) comparaison de la deuxième information sur le matériau détectée à un critère de matériau prédéfini associé à la deuxième information sur le matériau,
ledit matériau purifié étant délivré en tant que déchet recyclé si la deuxième information sur le matériau satisfait au critère de matériau prédéfini associé.

2. Procédé selon la revendication 1, la séparation des impuretés organiques et/ou métalliques à l'étape c) comprenant deux ou plusieurs opérations choisies dans le groupe constitué de la séparation des pièces longues, la séparation pneumatique, la séparation magnétique et le tamisage.

3. Procédé selon l'une quelconque des revendications 1 ou 2, le triage à l'étape d) étant effectué par un dispositif automatique.

4. Procédé selon l'une quelconque des revendications 1 à 3, ladite au moins une première information sur le matériau et/ou ladite au moins une deuxième information sur le matériau étant détectées avec une résolution spatiale et/ou temporelle, de sorte que l'on obtient respectivement un profil d'information résolu dans l'espace et/ou dans le temps, et/ou l'analyse à l'étape d) et/ou à l'étape e) étant effectuée par une ou plusieurs méthodes différentes choisies dans le groupe constitué de l'analyse de fluorescence X, la reconnaissance optique d'image, de préférence en utilisant une intelligence artificielle, et la spectroscopie d'absorption infrarouge, notamment la spectroscopie d'absorption en proche infrarouge.

5. Procédé selon l'une quelconque des revendications 1 à 4, la composition de la composition inhomogène de déchets ferreux étant commandée en fonction de la première information sur le matériau et/ou de la deuxième information sur le matériau.

6. Procédé selon l'une quelconque des revendications 1 à 5, le broyage à l'étape b) étant commandé en fonction de la première information sur le matériau et/ou de la deuxième information sur le matériau.

7. Procédé selon l'une quelconque des revendications 1 à 6, au moins une troisième information sur le matériau étant détectée lors du traitement ultérieur des déchets recyclés, la composition de la composition inhomogène de déchets ferreux et/ou le broyage à l'étape b) et/ou la séparation à l'étape c) étant commandées en fonction de ladite au moins une troisième information sur le matériau.

8. Procédé selon l'une des revendications 1 à 7, le procédé étant un procédé continu ou semi-continu.

9. Unité de recyclage de déchets pour exécuter le procédé selon l'une quelconque des revendications 1 à 8, comprenant :
- au moins un groupe de broyage (10) pour le broyage d'une composition inhomogène de déchets ferreux,
- moyens de séparation des impuretés organiques et/ou métalliques du matériau broyé,
- un ou plusieurs premiers dispositifs de détection pour analyser le matériau obtenu après la séparation, pour détecter une première information sur le matériau,
- moyens de triage automatique de pièces du matériau obtenu après la séparation, en fonction de la première information sur le matériau,
- un ou plusieurs premiers dispositifs de détection pour analyser le matériau obtenu après le triage, pour détecter une deuxième information sur le matériau, et
- un dispositif de traitement de données destiné à comparer la deuxième information sur le matériau à un critère de matériau prédéfini associé, et à délivrer le matériau purifié dans le dispositif comme déchets recyclés si la deuxième information sur le matériau satisfait au critère de matériau prédéfini associé.

10. Groupe de broyage (10) pour une utilisation dans un procédé selon l'une quelconque des revendications 1 à 8 ou dans une unité selon la revendication 9, comprenant :
- une chambre de broyage (12) dotée d'au moins une zone d'émission (14a, 14b) de matériau broyé, et
- au moins un rotor (16) agencé dans la chambre de broyage (12) et équipé de marteaux,
le groupe de broyage (10) disposant d'un élément réglable (20a, 20b) destiné à commander la surface d'émission, qui est disponible dans la zone d'émission (14a, 14b), du matériau broyé sortant de la chambre de broyage (12), et
le groupe de broyage (10) disposant dans la partie supérieure de la chambre de broyage (12) d'une première zone d'émission (14a) dotée d'un premier élément réglable (20a) qui est destiné à commander la surface d'émission disponible dans la première zone d'émission (14a), pour le matériau broyé sortant de la chambre de broyage (12), et ledit groupe de broyage (10) disposant dans le fond de la chambre de broyage (12), d'une deuxième zone d'émission (14b) dotée d'un deuxième élément réglable (20b) destiné à commander la surface d'émission, disponible dans la deuxième zone d'émission (14b), pour le matériau broyé sortant de la chambre de broyage (12).
